# EUROPEAN PATENT APPLICATION

(11) **EP 4 622 041 A1**
(43) Date of publication of application: **24.09.2025**
(21) Application number: 25160255.3
(22) Date of filing: 26.02.2025
(51) Int. Cl.: H02J 3/38

(54) **ENERGY MANAGEMENT SYSTEMS, DEVICES, AND METHODS FOR VIRTUALLY ISLANDING A MICROGRID**

(30) Priority: 21.03.2024 US 202418612416
(71) Applicant: ABB SCHWEIZ AG, 5400 Baden (CH)
(72) Inventor: JOSHI, Aniket M., Raleigh, 27606 (US); SURYANARAYANA, Harish, Apex, 27523 (US); MISCIO, Jacob T., Raleigh, 27601 (US)
(74) Representative: Maiwald GmbH

(57) **Abstract**

Systems and methods for controlling operation of a microgrid. The systems and methods include a control device, wherein the control device is configured to operate the microgrid in a state where the microgrid has a near-net-zero or net-zero energy exchange with a macrogrid while the microgrid is physically and electrically connected to the macrogrid. The methods can provide a smooth transition from the grid connected energy setpoints to the islanded requirement of net-zero power transaction.

## Description

### FIELD

The present disclosure relates to energy management systems, devices, and methods for virtually islanding one or more microgrid(s) that is configured to be connected to the macrogrid.

### BACKGROUND

A traditional power grid (or "the grid") is a set of connected power systems and loads, which can include several transformers, transmission lines, and various types of other components. "The grid" is also called a macrogrid. The term "off-the-grid" means (i) a system (e.g., power source(s) and load(s)) which is disconnected from the macrogrid, and/or (ii) a system which cannot be connected to the macrogrid.

### SUMMARY

It is contemplated that any of the following aspects or portions thereof can be combined with any other aspects or portions thereof.

In some aspects, the techniques described herein relate to a system including: a microgrid; and a control device, wherein the control device is configured operate the microgrid in a state where the microgrid has a near-net-zero or net-zero energy exchange with a macrogrid while the microgrid is physically and electrically connected to the macrogrid.

In some aspects, the techniques described herein relate to a system, wherein the near-net-zero energy exchange is in a range of ±0.01 per unit to ±0.4 per unit of rated power of the microgrid.

In some aspects, the techniques described herein relate to a system, wherein the microgrid includes: energy loads; and energy sources, wherein the control device is configured to monitor energy requirements of the energy loads with energy supply of the energy sources while the microgrid is operational. Examples of energy sources include but are not necessarily limited to an energy source which can absorb and/or send power, such as generators, batteries, supercapacitors, and the like.

In some aspects, the techniques described herein relate to a system, wherein the control device is configured to: receive energy data from a remote system and/or the macrogrid; determine requirement by the energy loads of the microgrid; determine energy supply by the energy sources of the microgrid; compare the requirement and the energy supply; and determine whether shedding at least one of the loads of the microgrid can achieve the near-net-zero or net-zero energy exchange with the macrogrid while the microgrid is physically and electrically connected to the macrogrid. Shedding (e.g., load shedding) is a process that responds to certain events in order to protect or maintain power system's total integrity (e.g., prevent total blackout). It allows for reduction in the demand of energy use by, for example, powering down controllable components, devices, and/or systems.

In some aspects, the techniques described herein relate to a system, wherein the control device is configured to change to the state of the microgrid from a first state, wherein in the first state, the microgrid is electrically connected to a macrogrid, and the microgrid has power exchanged with a macrogrid.

In some aspects, the techniques described herein relate to a system, further including: wherein the control device is configured to change to a third state of the microgrid from the state, wherein in the third state, the microgrid is physically and electrically disconnected to the macrogrid.

In some aspects, the techniques described herein relate to a computerized method of operating a microgrid, including: while the microgrid is operational, and while the microgrid is physically and electrically connected to a macrogrid, changing from a first state of the microgrid to a second state of the microgrid, wherein in the first state, the microgrid has energy exchange with a macrogrid; and wherein in the second state, the microgrid has a net-zero energy exchange with the macrogrid.

In some aspects, the techniques described herein relate to a computerized method, further including: while the microgrid is operational, changing from the second state of the microgrid to a partial virtual island state of the microgrid, wherein in the partial virtual island state, the microgrid has a near-net-zero energy exchange with the macrogrid.

In some aspects, the techniques described herein relate to a computerized method, further including: while the microgrid is operational, changing from the second state of the microgrid to a third state of the microgrid, wherein in the third state, the microgrid is physically and electrically disconnected to the macrogrid.

In some aspects, the techniques described herein relate to a control device including: a processor; a network component, which is in communication with the processor, wherein the processor communicates with a remote system via the network component; and a non-transitory computer readable memory, which is in communication with the processor, wherein the non-transitory computer readable memory has stored therein a microgrid control program, wherein when executed by the processor, the processor performs the computerized method.

In some aspects, the techniques described herein relate to a computerized method of operating a microgrid, including: while the microgrid is operational, and while the microgrid is physically and electrically connected to a macrogrid, changing from a first state of the microgrid to a partial virtual island state of the microgrid, wherein in the first state, the microgrid has energy exchange with a macrogrid; and wherein in the partial virtual island state, the microgrid has a near-net-zero energy exchange with the macrogrid.

In some aspects, the techniques described herein relate to a computerized method, further including: while the microgrid is operational, changing from the partial virtual island state of the microgrid to a second state of the microgrid, wherein in the second state, the microgrid enforces a strictly net-zero energy exchange with the macrogrid.

In some aspects, the techniques described herein relate to a computerized method, further including: while the microgrid is operational, changing from the partial virtual island state of the microgrid to a third state, wherein the microgrid is physically and electrically disconnected from the macrogrid.

In some aspects, the techniques described herein relate to a control device including: a processor; a network component, which is in communication with the processor, wherein the processor communicates with a remote system via the network component; and a non-transitory computer readable memory, which is in communication with the processor, wherein the non-transitory computer readable memory has stored therein a microgrid control program, wherein when executed by the processor, the processor performs the computerized method.

In some aspects, there is a method comprising a controller operating a microgrid to enter a virtual island mode; the controller monitoring energy information of the microgrid; the controller detecting a variance of a load and/or a source; the controller operating the microgrid to enter a partial virtual island mode; the controller operating one or more components of the microgrid to obtain PCC power to be within a virtual islanding band; and the controller operating the microgrid to exit the partial virtual island mode, wherein the PCC aggregate setpoints for P and Q return to their pre-island values, awaiting a new reference.

### BRIEF DESCRIPTION OF THE DRAWINGS

FIG. 1 is a schematic diagram of a non-limiting example of a system, according to some embodiments.
FIG. 2 is an exemplary flow diagram of a method, according to some embodiments.
FIG. 3 is an exemplary flow diagram of a method, according to some embodiments.

### DETAILED DESCRIPTION

Some embodiments of the disclosure are herein described, by way of example only, with reference to the accompanying drawings. With specific reference now to the drawings in detail, it is stressed that the embodiments shown are by way of example and for purposes of illustrative discussion of embodiments of the disclosure. In this regard, the description taken with the drawings makes apparent to those skilled in the art how embodiments of the disclosure may be practiced.

Various embodiments of the present disclosure are directed to systems, devices, and methods for controlling a microgrid with respect to the grid, wherein in at least one state, the microgrid is balanced locally (i.e., the local loads and local power sources) such that power is not imported from the grid. According to some embodiments, this at least one state is achieved while the microgrid is still connected to the grid.

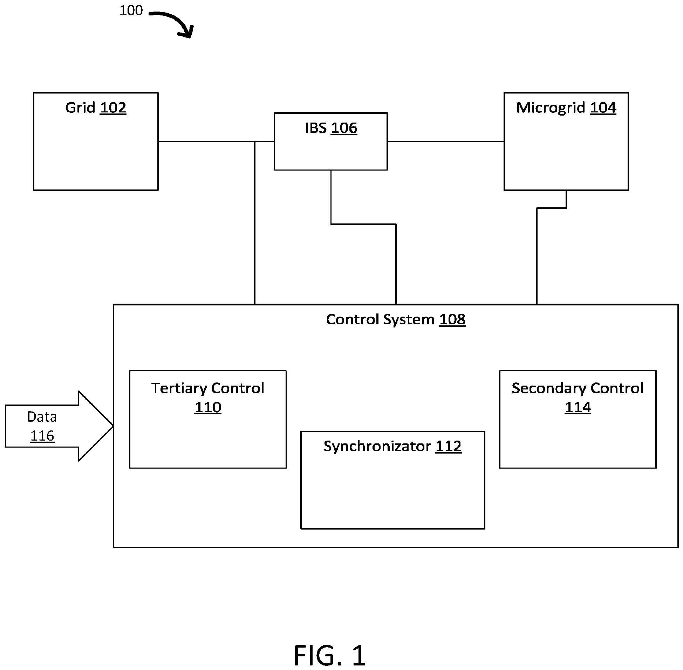

Fig. 1 shows a schematic exemplary system 100 which includes a grid 102 and a microgrid 104 connected via a switch, such as for example, an Intelligent Bypass Switch (IBS) 106. When the IBS 106 physically disconnects the microgrid 104 from the grid 102, the microgrid 104 enters "island mode," which is a state of the microgrid 104 being physically and electrically disconnected and isolated from the grid 102. In the island mode, the microgrid 104 cannot receive power from the grid 102, and it would require the IBS 106 to physically reconnect the microgrid 104 to the grid 102 in order for the microgrid 104 to import and/or export power to the grid 102.

The IBS 106 is controlled by a control system 108. According to some embodiments, the control system 108 includes a tertiary control 110 component, a synchronization 112 component, and a secondary control 114 component. The tertiary control 110 receives energy data (e.g., voltage stability, frequency stability, etc.) a synchronization 112 component assists in controlling the operation of the IBS 106. And the secondary control 114 component controls various component of the microgrid 104.

According to some embodiments, the microgrid 104 is a group of interconnected loads and energy sources within clearly defined electrical boundaries that acts as a single controllable entity which can be separated with respect to the grid 102. A traditional microgrid is configured to have two states: (state 1) being physically connected to the grid (i.e., grid-connected mode) or (state 2) being physically disconnected from the grid (i.e., "island-mode"). Accordingly, the term "island-mode" traditionally means a microgrid that is physically isolated (i.e., physically disconnected) from the grid 102. According to some embodiments, the exemplary microgrid 104 includes at least some or all of the following components: (a) energy sources or distributed generators (also known as microsources), (b) adaptable loads (or energy loads), (c) devices for distributed energy storage, (d) control system(s), and (e) components of the point of common coupling (a.k.a. PCC). These structural components are linked to, for example, a low-voltage distribution network, generally allowing for controlled and coordinated operation in different states, e.g., state 1 or state 2 (see above). A variety of renewable energy resources can be utilized as power generators within the microgrid 104.

According to some embodiments, a control system 108 includes one or more control device(s) 110, 112, 114 which operates at least one or more of the components connected to or within the microgrid 104. An exemplary control device of the control system 108 is or includes a specialized computer which includes a processor, a network component, which is in communication with the processor, wherein the processor communicates with a remote system via the network component, and a non-transitory computer readable memory, which is in communication with the processor, wherein the non-transitory computer readable memory has stored therein a microgrid operation (or control) program, wherein when executed by the processor, the processor performs one or more of the embodied methods disclosed herein.

Various embodiments of the present disclosure are directed to systems, devices, and methods for controlling a microgrid 104 with respect to the grid 102, wherein in at least one state, the microgrid 104 is balanced locally (i.e., the local loads and local power sources) such that power is not imported from the grid 102 or substantially not imported from the grid 102. This state is achieved while the microgrid 104 is still physically and electrically connected to the grid 102.

According to some embodiments, power that is "substantially not imported from the grid" means power delivered from the grid 102 to the microgrid 104 is near 0 kWe (kilowatts of electrical power) but not exactly 0 kWe. According to some embodiments, power that is "substantially not imported from the grid" means power delivered from the grid 102 to the microgrid 104 is > 0 kWe.

According to some embodiments, power that is "substantially not imported from the grid" means power delivered from the grid 102 to the microgrid 104 (P_{G}) is 0 kWe < P_{G} < 100 kWe. According to some embodiments, power that is "substantially not imported from the grid" means power delivered from the grid 102 to the microgrid 104 (P_{G}) is represented by the relationship: X kWe < P_{G} < Y kWe. According to some embodiments, X is 0. According to some embodiments, X is 10. According to some embodiments, X is 100. According to some embodiments, X is 1000. According to some embodiments, Y is 100. According to some embodiments, Y is 500. According to some embodiments, Y is 1000. According to some embodiments, Y is 1500. According to some embodiments, Y is 2000.

According to some embodiments, substantially not imported from the grid 102 and/or substantially not exported to the grid 102 describes a near-net-zero energy exchange between the microgrid 104 and the grid 102. In some aspects, the near-net-zero energy exchange is in a range of ±0.01 per unit to ±0.02 per unit of rated power of the microgrid 104. In some aspects, the near-net-zero energy exchange is in a range of ±0.01 per unit to ±0.03 per unit of rated power of the microgrid 104. In some aspects, the near-net-zero energy exchange is in a range of ±0.01 per unit to ±0.04 per unit of rated power of the microgrid 104. In some aspects, the near-net-zero energy exchange is in a range of ±0.01 per unit to ±0.05 per unit of rated power of the microgrid 104. In some aspects, the near-net-zero energy exchange is in a range of ±0.01 per unit to ±0.06 per unit of rated power of the microgrid 104. In some aspects, the near-net-zero energy exchange is in a range of ±0.01 per unit to ±0.07 per unit of rated power of the microgrid 104. In some aspects, the near-net-zero energy exchange is in a range of ±0.01 per unit to ±0.08 per unit of rated power of the microgrid 104. In some aspects, the near-net-zero energy exchange is in a range of ±0.01 per unit to ±0.09 per unit of rated power of the microgrid 104. In some aspects, the near-net-zero energy exchange is in a range of ±0.01 per unit to ±0.10 per unit of rated power of the microgrid 104. In some aspects, the near-net-zero energy exchange is in a range of ±0.01 per unit to ±0.11 per unit of rated power of the microgrid 104. In some aspects, the near-net-zero energy exchange is in a range of ±0.01 per unit to ±0.12 per unit of rated power of the microgrid 104. In some aspects, the near-net-zero energy exchange is in a range of ±0.01 per unit to ±0.13 per unit of rated power of the microgrid 104. In some aspects, the near-net-zero energy exchange is in a range of ±0.01 per unit to ±0.14 per unit of rated power of the microgrid 104. In some aspects, the near-net-zero energy exchange is in a range of ±0.01 per unit to ±0.15 per unit of rated power of the microgrid 104. In some aspects, the near-net-zero energy exchange is in a range of ±0.01 per unit to ±0.16 per unit of rated power of the microgrid 104. In some aspects, the near-net-zero energy exchange is in a range of ±0.01 per unit to ±0.17 per unit of rated power of the microgrid 104. In some aspects, the near-net-zero energy exchange is in a range of ±0.01 per unit to ±0.18 per unit of rated power of the microgrid 104. In some aspects, the near-net-zero energy exchange is in a range of ±0.01 per unit to ±0.19 per unit of rated power of the microgrid 104. In some aspects, the near-net-zero energy exchange is in a range of ±0.01 per unit to ±0.20 per unit of rated power of the microgrid 104. In some aspects, the near-net-zero energy exchange is in a range of ±0.01 per unit to ±0.21 per unit of rated power of the microgrid 104. In some aspects, the near-net-zero energy exchange is in a range of ±0.01 per unit to ±0.22 per unit of rated power of the microgrid 104. In some aspects, the near-net-zero energy exchange is in a range of ±0.01 per unit to ±0.23 per unit of rated power of the microgrid 104. In some aspects, the near-net-zero energy exchange is in a range of ±0.01 per unit to ±0.24 per unit of rated power of the microgrid 104. In some aspects, the near-net-zero energy exchange is in a range of ±0.01 per unit to ±0.25 per unit of rated power of the microgrid 104. In some aspects, the near-net-zero energy exchange is in a range of ±0.01 per unit to ±0.26 per unit of rated power of the microgrid 104. In some aspects, the near-net-zero energy exchange is in a range of ±0.01 per unit to ±0.27 per unit of rated power of the microgrid 104. In some aspects, the near-net-zero energy exchange is in a range of ±0.01 per unit to ±0.28 per unit of rated power of the microgrid 104. In some aspects, the near-net-zero energy exchange is in a range of ±0.01 per unit to ±0.29 per unit of rated power of the microgrid 104. In some aspects, the near-net-zero energy exchange is in a range of ±0.01 per unit to ±0.30 per unit of rated power of the microgrid 104. In some aspects, the near-net-zero energy exchange is in a range of ±0.01 per unit to ±0.31 per unit of rated power of the microgrid 104. In some aspects, the near-net-zero energy exchange is in a range of ±0.01 per unit to ±0.32 per unit of rated power of the microgrid 104. In some aspects, the near-net-zero energy exchange is in a range of ±0.01 per unit to ±0.33 per unit of rated power of the microgrid 104. In some aspects, the near-net-zero energy exchange is in a range of ±0.01 per unit to ±0.34 per unit of rated power of the microgrid 104. In some aspects, the near-net-zero energy exchange is in a range of ±0.01 per unit to ±0.35 per unit of rated power of the microgrid 104. In some aspects, the near-net-zero energy exchange is in a range of ±0.01 per unit to ±0.36 per unit of rated power of the microgrid 104. In some aspects, the near-net-zero energy exchange is in a range of ±0.01 per unit to ±0.37 per unit of rated power of the microgrid 104. In some aspects, the near-net-zero energy exchange is in a range of ±0.01 per unit to ±0.38 per unit of rated power of the microgrid 104. In some aspects, the near-net-zero energy exchange is in a range of ±0.01 per unit to ±0.39 per unit of rated power of the microgrid 104. In some aspects, the near-net-zero energy exchange is in a range of ±0.01 per unit to ±0.40 per unit of rated power of the microgrid 104.

In some aspects, the near-net-zero energy exchange has the smallest per unit value of ±0.01 per unit. In some aspects, the near-net-zero energy exchange has a per unit value of up to ±0.40 per unit of rated power of the microgrid 104.

Various embodiments of the methods for controlling the microgrid 104 with respect to the grid 102, wherein in at least one state, the microgrid 104 is balanced locally (i.e., the local loads and local power sources) such that power is not exported to the grid 102. According to some embodiments, this at least one state is achieved while the microgrid 104 is still connected to the grid 102.

When there is a net-zero energy exchange between the microgrid 104 and the grid 102, even while connected via IBS 106, the microgrid 104 has entered a virtual island mode.

When there is a near-net-zero energy exchange between the microgrid 104 and the grid 102, even while connected via IBS 106, the microgrid 104 has entered a partial virtual island mode.

According to some embodiments, the control system 108 can receive various forms of data 116 and consider the data 116 when determining which mode and/or state the microgrid 104 should be in. Examples of the data 116 include, but are not necessarily limited to, one or more of the following:
- Maintenance schedule of any parts of the system 100
- Anticipated outage(s) of any parts of the system 100
- Grid 102 abnormalities being detected
- User preferences
- Microgrid 104 heath indicators
- Error handling
- Economic considerations

For example, virtual island mode or partial virtual island mode can be activated by the control system 108 when at least one or more of the above conditions are expected or encountered via receiving data 116.

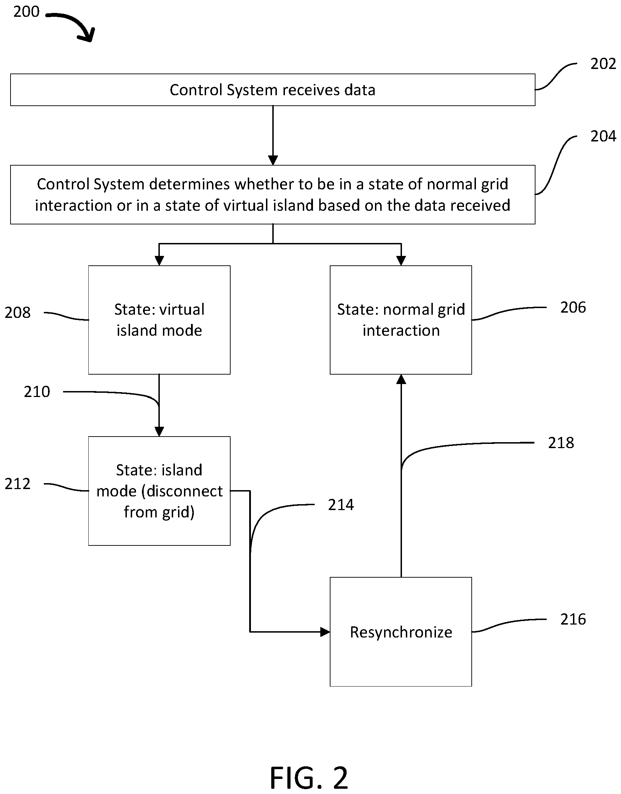

Fig. 2 shows a schematic flowchart of an embodiment of the control and operational process 200. According to some embodiments, the process 200 is performed by the control system (e.g., 108 shown in Fig. 1). According to some embodiments, the process 200 is performed, more specifically, by the tertiary control (e.g., 110 shown in Fig. 1).

As shown in Fig. 2, the control system (e.g., 108 shown in Fig. 1) receives 202 various data (e.g., 116 shown in Fig. 1). The data can include at least one or more of: status (e.g., health indicators) of the microgrid, maintenance schedule of any parts of the system, anticipated outage(s) of any parts of the system, grid abnormalities, user preferences, errors, and/or economic data. Then, based on the data received, the control system determines 204 whether to be in a state of normal grid interaction (i.e., having energy exchange with the grid), or be in a state of virtual island (i.e., achieve a net zero energy exchange with the grid). If and when the control system determines to be in the state of normal grid interaction 206, the control system operates the components required to achieve that state, such as for example, keeping the IBS (e.g., 106 shown in Fig. 1) physically and electrically connected and allowing energy to flow pass therethrough between the grid and the microgrid. If and when the control system determines to be in the state of virtual island 208, the control system operates the components required to achieve that state, such as for example, balance the loads and sources of the microgrid such that the energy exchange passing through the IBS achieves a net zero energy exchange.

When the microgrid has achieved the virtual island mode 208, there can be situations where the state has to be changed, which is determined at step or process 210. For example, Distributed System Operation (DSO) and functions that are related to compliance of grid code (IEEE 1547), like tracking of regulation curves, voltage & frequency ride-through, as well as other grid codes (e.g., CEI 0-16) to follow a pre-defined operating mode. As such, under certain situations, when met and/or required, the controller operates to enter a physical island mode 212 (i.e., physically and electrically disconnect from the grid via disconnecting at the IBS). It is to be mentioned that, according to some embodiments disclosed herein, it is not possible for the system to change to a virtual island mode directly from the physical island mode 212. From here, as additional data is received and monitored by the control system 214, the control system operates to resynchronize 216 and change the state 218 (e.g., IEEE 1547 enter service ramp rate control) to achieve a normal grid interaction state 206. Then the entire process 200 can repeat, and the control system continues to monitor and/or receive data 202 for continued operation of the microgrid. According to some embodiments, the monitoring and/or receiving of data 202 is performed every 200 milliseconds. According to some embodiments, the monitoring and/or receiving of data 202 and determining whether to be in the virtual island mode or to be in the normal grid operation mode is performed every 200 milliseconds.

According to some embodiments, a microgrid is controlled by the control system to have an operating mode that can balance locally its local loads and local power sources, rather than importing or exporting power from the grid. The virtual island mode can prevent the undesirable consequences in the event of planned outages, maintenances, identified grid abnormalities leading to faults or disconnections, in addition to taking economic advantages of energy markets for smart power grids.

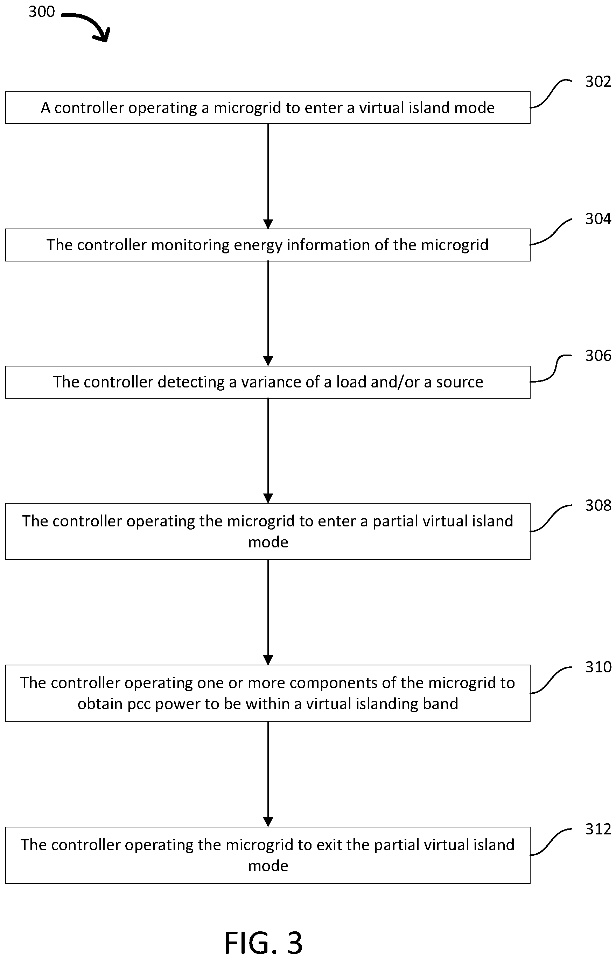

Fig. 3 shows a schematic flowchart of an embodied process 300 (where steps 208, 210 of the process 200 in Fig. 2 can be further modified and/or clarified). The process 300 includes a controller operating a microgrid to enter a virtual island mode 302. Then the controller monitors energy information of the microgrid 304. Then, when the controller detects 306 a variance of a load and/or a source of the microgrid, the controller must act to meet the needs of the microgrid. Accordingly, the controller operates 308 the microgrid to enter a partial virtual island mode. Then, the controller can operate 310 one or more components of the microgrid to obtain PCC power to be within a virtual islanding band. Ultimately, the controller operates 312 the microgrid to exit the partial virtual island mode, either back to the virtual island mode or to a grid disconnected mode (e.g., 212 shown in Fig. 2).

Among those benefits and improvements that have been disclosed, other objects and advantages of this disclosure will become apparent from the following description taken in conjunction with the accompanying figures. Detailed embodiments of the present disclosure are disclosed herein; however, it is to be understood that the disclosed embodiments are merely illustrative of the disclosure that may be embodied in various forms. In addition, each of the examples given regarding the various embodiments of the disclosure which are intended to be illustrative, and not restrictive.

Throughout the specification and claims, the following terms take the meanings explicitly associated herein, unless the context clearly dictates otherwise. The phrases "in one embodiment," "in an embodiment," and "in some embodiments" as used herein do not necessarily refer to the same embodiment(s), though it may. Furthermore, the phrases "in another embodiment" and "in some other embodiments" as used herein do not necessarily refer to a different embodiment, although it may. All embodiments of the disclosure are intended to be combinable without departing from the scope or spirit of the disclosure.

As used herein, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "between" does not necessarily require being disposed directly next to other elements. Generally, this term means a configuration where something is sandwiched by two or more other things. At the same time, the term "between" can describe something that is directly next to two opposing things. Accordingly, in any one or more of the embodiments disclosed herein, a particular structural component being disposed between two other structural elements can be:
disposed directly between both of the two other structural elements such that the particular structural component is in direct contact with both of the two other structural elements;
disposed directly next to only one of the two other structural elements such that the particular structural component is in direct contact with only one of the two other structural elements;
disposed indirectly next to only one of the two other structural elements such that the particular structural component is not in direct contact with only one of the two other structural elements, and there is another element which juxtaposes the particular structural component and the one of the two other structural elements;
disposed indirectly between both of the two other structural elements such that the particular structural component is not in direct contact with both of the two other structural elements, and other features can be disposed therebetween; or
any combination(s) thereof.

## Claims

1. A system comprising:
a microgrid; and
a control device,
wherein the control device is configured to operate the microgrid in a state where the microgrid has a near-net-zero or net-zero energy exchange with a macrogrid while the microgrid is physically and electrically connected to the macrogrid.

2. The system of claim 1, wherein the near-net-zero energy exchange is in a range of ±0.01 per unit to ±0.4 per unit of rated power of the microgrid.

3. The system according to one of the previous claims 1 to 2,
wherein the microgrid comprises:
energy loads; and
energy sources,
wherein the control device is configured to monitor energy requirements of the energy loads with energy supply of the energy sources while the microgrid is operational.

4. The system according to one of the previous claims 1 to 3,
wherein the control device is configured to:
receive energy data from a remote system and/or the macrogrid;
determine requirement by the energy loads of the microgrid;
determine energy supply by the energy sources of the microgrid;
compare the requirement and the energy supply; and
determine whether shedding at least one of the loads of the microgrid can achieve the near-net-zero or net-zero energy exchange with the macrogrid while the microgrid is physically and electrically connected to the macrogrid.

5. The system according to one of the previous claims 1 to 4,
wherein the control device is configured to change to the state of the microgrid from a first state,
wherein in the first state,
the microgrid is physically and electrically connected to a macrogrid, and
the microgrid has energy exchange with a macrogrid.

6. The system according to one of the previous claims 1 to 5, further comprising: wherein the control device is configured to change to a third state of the microgrid from the state,
wherein in the third state, the microgrid is physically and electrically disconnected to the macrogrid.

7. A computerized method of operating a microgrid, comprising:
while the microgrid is operational, and
while the microgrid is physically and electrically connected to a macrogrid, changing from a first state of the microgrid to a second state of the microgrid,
wherein in the first state, the microgrid has energy exchange with a macrogrid; and
wherein in the second state, the microgrid has a net-zero energy exchange with the macrogrid.

8. The computerized method according to claim 7, further comprising:
while the microgrid is operational,
changing from the second state of the microgrid to a partial virtual island state of the microgrid,
wherein in the partial virtual island state, the microgrid has a near-net-zero energy exchange with the macrogrid.

9. The computerized method according to one of the previous claims 7 to 8, wherein the near-net-zero energy exchange is in a range of ±0.01 per unit to ±0.4 per unit of rated power of the microgrid.

10. The computerized method according to one of the previous claims 7 to 9, further comprising:
while the microgrid is operational,
changing from the second state of the microgrid to a third state of the microgrid,
wherein in the third state, the microgrid is physically and electrically disconnected to the macrogrid.

11. A control device comprising:
a processor;
a network component, which is in communication with the processor, wherein the processor communicates with a remote system via the network component; and
a non-transitory computer readable memory, which is in communication with the processor,
wherein the non-transitory computer readable memory has stored therein a microgrid control program, wherein when executed by the processor, the processor performs the computerized method of claim 7.

12. A computerized method of operating a microgrid, comprising:
while the microgrid is operational, and
while the microgrid is physically and electrically connected to a macrogrid,
changing from a first state of the microgrid to a partial virtual island state of the microgrid,
wherein in the first state, the microgrid has energy exchange with a macrogrid; and
wherein in the partial virtual island state, the microgrid has a near-net-zero energy exchange with the macrogrid.

13. The computerized method according to claim 12, wherein the near-net-zero energy exchange is in a range of ±0.01 per unit to ±0.4 per unit of rated power of the microgrid.

14. The computerized method according to one of the previous claims 12 to 13, further comprising:
while the microgrid is operational,
changing from the partial virtual island state of the microgrid to a second state of the microgrid,
wherein in the second state, the microgrid has a net-zero energy exchange with the macrogrid.

15. The computerized method according to one of the previous claims 12 to 14, further comprising:
while the microgrid is operational,
changing from the partial virtual island state of the microgrid to a third state of the microgrid,
wherein in the third state, the microgrid is physically and electrically disconnected to the macrogrid.

16. A control device comprising:
a processor;
a network component, which is in communication with the processor, wherein the processor communicates with a remote system via the network component; and
a non-transitory computer readable memory, which is in communication with the processor,
wherein the non-transitory computer readable memory has stored therein a microgrid control program, wherein when executed by the processor, the processor performs the computerized method of claim 12.
